# FASCICULE DE BREVET EUROPEEN

(11) **EP 1 266 144 B1**
(45) Date de publication et mention de la délivrance du brevet: **24.11.2004**
(21) Numéro de dépôt: 01962427.9
(22) Date de dépôt: 22.03.2001
(51) Int. Cl.: F15B 15/19, F15B 15/26

(54) **MECANISME A LIBERATION CONTROLEE NOTAMMENT POUR APPLICATION DANS LE DOMAINE SPATIAL**
STEUERBARES ENTRIEGELUNGSMECHANISMUS, INSBESONDERE FÜR LUFTFAHRTTECHNIK
RELEASED CONTROL RELEASE MECHANISM IN PARTICULAR FOR USE IN THE SPACE INDUSTRY

(30) Priorité: 24.03.2000 FR 0003815
(43) Date de publication de la demande: 18.12.2002
(73) Titulaire: ETIENNE LACROIX - TOUS ARTIFICES SA, 31600 Muret (FR)
(72) Inventeur: VALEMBOIS, Guy, F-31700 Blagnac (FR); MEDUS, Dominique, F-31240 l'Union (FR)
(74) Mandataire: Texier, Christian
(86) Numéro de dépôt international: PCT/FR2001/000870
(87) Numéro de publication internationale: WO 2001/073301

(56) Documents cités:
- EP-A- 0 657 326
- WO-A-01/40664
- WO-A-86/07427
- FR-A- 1 558 534
- US-A- 3 186 163
- US-A- 3 242 666
- US-A- 4 158 322
- US-A- 4 263 839

## Description

La présente invention concerne le domaine des mécanismes à libération contrôlée, notamment mais non exclusivement les pyromécanismes, c'est à dire le domaine des mécanismes commandés par un effet pyrotechnique.

La présente invention trouve notamment, mais non exclusivement, application dans le domaine de l'industrie spatiale, par exemple sur les lanceurs ou les satellites.

Le document US-A-3 186 163 décrit un mécanisme à libération controlée connue.

Les moyens actionnés par un effet thermique connus, notamment les moyens pyrotechniques connus, offrent de grandes possibilités. Ils présentent en particulier un fort potentiel entre énergie fournie et masse embarquée, ainsi qu'une grande fiabilité. Ils présentent également une forte insensibilité aux rayonnements électromagnétiques.

Cependant ces mécanismes présentent également un inconvénient majeur : la grande dynamique de choc induite par leur fonctionnement.

En effet, les niveaux de chocs et de vibrations sont souvent rédhibitoires à l'utilisation d'équipements fragile à leur proximité.

La présente invention a pour but de proposer un nouveau mécanisme qui ne présente pas l'inconvénient précité.

Ce but est atteint dans le cadre de la présente invention, grâce à un équipement du type défini en revendication 1 annexée laquelle est délimitée sous forme d'un préambule et d'une partie caractérisante par rapport au document US-A-3 186 163.

Selon une autre caractéristique avantageuse de la présente invention, le moyen de verrouillage comprend au moins un élément à base de matériau à bas point de fusion, en métal, et un moyen de chauffage de puissance adaptée, du type composition pyrotechnique fortement exothermique.

Selon une autre caractéristique avantageuse de la présente invention, le moyen de verrouillage comprend deux éléments redondants et/ou complémentaires.

Selon une autre caractéristique avantageuse de la présente invention, le moyen de verrouillage comprend une bague brasée sur l'un des éléments de structure susceptibles de déplacement, à l'aide d'un matériau à bas point de fusion.

Selon une autre caractéristique avantageuse de la présente invention, ladite bague est formée d'une structure susceptible d'effondrement dès fusion du matériau de brasure.

Selon une autre caractéristique avantageuse de la présente invention, le moyen de verrouillage comprend un bloc de matériau à bas point de fusion formant butée de déplacement.

Selon une autre caractéristique avantageuse de la présente invention, le moyen de blocage comprend une structure de pince en prise avec l'un des éléments de structure susceptibles de déplacement.

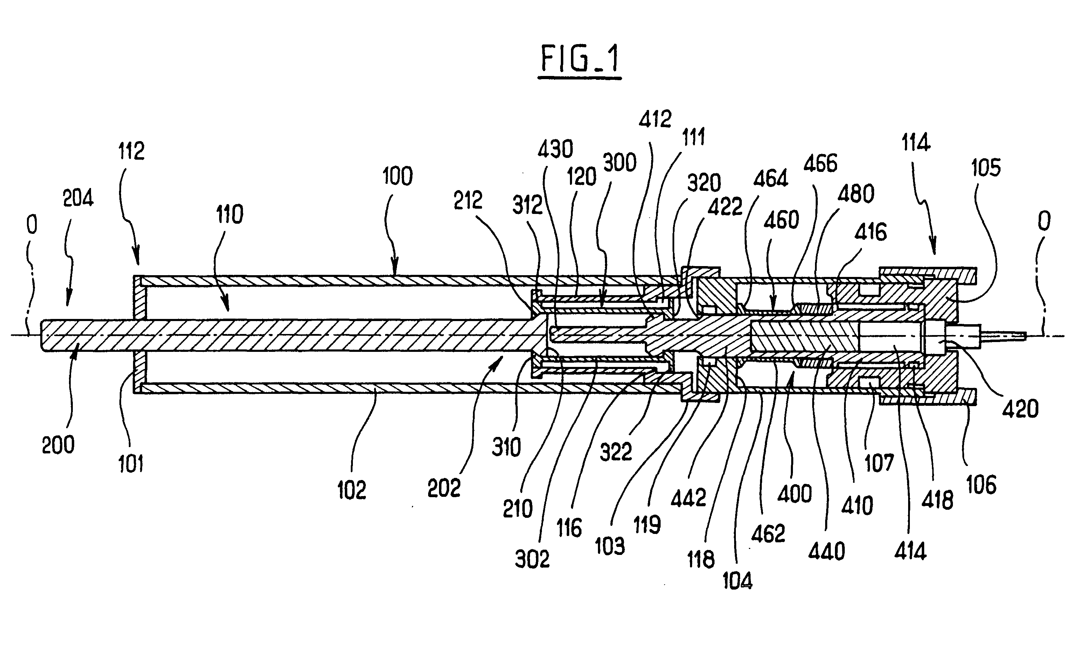

D'autres caractéristiques, buts et avantages de la présente invention, apparaîtront à la lecture de la description détaillée qui va suivre et en regard du dessin annexé, donné à titre d'exemple non limitatif, qui représente une vue en coupe axiale longitudinale d'un dispositif conforme à la présente invention en position initiale de stockage.

Le dispositif illustré sur la figure annexée comprend deux éléments de structure susceptibles de déplacement relatif 100, 200, un moyen de blocage 300 et un moyen de verrouillage 400.

Les éléments de structure 100 et 200 peuvent faire l'objet de nombreux modes de réalisation, notamment pour s'adapter aux interfaces externes des moyens qu'ils sollicitent.

Selon le mode de réalisation préférentiel illustré sur la figure annexée, l'un des éléments 100 est constitué d'un boîtier fixe, globalement annulaire autour d'un axe O-O.

Plus précisément selon le mode de réalisation illustré sur la figure annexée, l'élément 100 est formé par assemblage de 6 pièces 101, 102, 103, 104, 105 et 106 qui seront décrites plus en détail par la suite. Cependant l'invention n'est pas limitée à ce mode de réalisation particulier.

Le second élément de structure 200 est lui formé d'une tige rectiligne rigide centrée sur l'axe O-O.

Le boîtier 100 possède une chambre interne 110 à cavités multiples qui loge le moyen de blocage 300 et le moyen de verrouillage 400.

L'élément de structure 200 traverse l'un des éléments 101 du boîtier 100 formant une cloison d'extrémité transversale à l'axe O-O.

Par la suite cette extrémité 112 du boîtier 100, par laquelle émerge l'élément 200 sera désignée « extrémité amont », par convention, a des fins de simplification de description, tandis que l'extrémité opposée 114 du boîtier sera désignée « extrémité aval ».

Ainsi l'élément de structure 200 est susceptible de coulisser à translation, par rapport au boîtier 100, selon l'axe O-O, lorsqu'il est libéré par le moyen de blocage 300.

De préférence la présente invention s'applique à des configurations dans lesquelles l'élément 200 est sollicité élastiquement par des moyens auxiliaires (non représentés sur la figure annexée), vers l'extérieur du boîtier 100.

On notera que l'élément 200 est muni d'une excroissance annulaire 210 sur son extrémité libre 202 interne au boîtier 100. Cette excroissance 210 coopère avec le moyen de blocage 300.

De préférence l'excroissance 210 est définie par une surface tronconique 212 dirigée vers l'extrémité 204 de l'élément 200 extérieure au boîtier 10 et qui converge vers cette extrémité 204.

L'élément de blocage 300 est de préférence composé d'une pince apte à saisir l'excroissance 210 précitée pour interdire initialement tout déplacement de l'élément 200.

Il s'agit de préférence d'une pince composée de plusieurs coquilles équiréparties autour de l'axe O-O et confinées au repos, en prise avec l'excroissance 210 de la tige 20, par le boîtier 100.

La pince 300 est cependant susceptible de translation par rapport au boîtier, lorsqu'elle est libérée par le moyen de verrouillage associé 400, pour échapper aux moyens de confinement formés par le boîtier 100 et ainsi libérer à son tour la tige 200.

De préférence chaque coquille de la pince 300 comprend une cloison en forme de secteur de cylindre 302, munie respectivement à chacune de ses extrémités, d'une nervure interne et d'une nervure externe.

Sur l'extrémité amont, les nervures interne et externe sont référencées respectivement 310, 312, tandis que sur l'extrémité aval, les nervures interne et externe sont référencées respectivement 320 et 322.

Les nervures internes amont 310 ont une géométrie complémentaire de l'excroissance 210 et sont adaptées pour coopérer avec celle-ci. En position de repos initiale, comme on le voit sur la figure annexée, les coquilles formant la pince 300 étant resserrées près de l'axe O-O, les nervures internes forment une butée en amont de l'excroissance 20. Ainsi la pince 300 maintient axialement la tige 200 et interdit l'extraction de celle-ci.

Les nervures externes amont 312 sont placées dans un fourreau 120 complémentaire formé dans le boîtier 100.

Ainsi en position de repos initiale, les nervures externes 312 reposent contre la périphérie interne du fourreau 120 et interdisent l'expansion de la pince 300.

Cependant dés que les nervures externes 312 dépassent l'extrémité amont du fourreau 120, suite à un glissement de la pince 300, selon l'axe O-O, lesdites nervures externes 312 échappent au fourreau 120. Les coquilles composant la pince 300 peuvent alors s'expanser et libérer la tige 200.

L'homme de l'art comprendra que à cet égard la coopération définie entre les surfaces tronconiques de l'excroissance 210 et des nervures 310, tend à solliciter la pince en expansion, en raison de l'effort axial exercé sur la tige 200.

De préférence au repos les nervures externes 312 affleurent l'extrémité amont du fourreau 120. Par ailleurs l'étendue axiale des nervures 312 est de préférence de l'ordre de 2 mm. Ainsi l'homme de l'art comprendra qu'il suffit d'un glissement de la pince de 2 mm pour que les nervures 312 de la pince 300 échappent au fourreau 120 pour autoriser l'expansion de la pince 300 et la libération de la tige 200.

Les nervures internes aval 320 coopèrent avec un piston 410 appartenant au moyen de verrouillage 400.

Le piston 410 est susceptible de translation selon l'axe O-O par rapport au boîtier 100. Cependant le piston 410 est initialement immobilisé dans le boîtier 100 par des moyens qui seront décrits plus en détail par la suite.

Plus précisément les nervures 320, au repos, sont placées en aval d'un bourrelet annulaire 412 formé sur le piston 410. Ainsi tant que le piston 410 est interdit de déplacement dans le boîtier 100, la coopération définie entre le bourrelet 412 et les nervures 320, interdit le déplacement de la pince 300.

Les nervures externes aval 322 sont placées dans un segment cylindrique complémentaire 111 de la chambre 110, en aval d'un décrochement annulaire 116 formé par ce segment 111. La distance séparant au repos le décrochement 116et les nervures externes 322 est supérieure à l'amplitude de glissement requise pour que la pince 300 échappe au fourreau 120.

L'amplitude de la translation de la pince 300 est ainsi limitée par la butée des nervures 322 contre le décrochement 116

En sus du piston 410, le moyen de verrouillage 400 comprend un moyen de chauffage 440, de préférence sous forme d'une composition pyrotechnique, une bague 460 et un bloc de matériau à bas point de fusion 480, de préférence un métal.

Comme on le comprendra à la lecture de la description détaillée qui va suivre, la bague 460 et le bloc de métal à bas de point de fusion constituent deux moyens redondants.

La composition pyrotechnique 440 est de préférence mélangée ou combinée avec un peu de poudre apte à générer des gaz propres à assurer un effet de propulsion du piston 410 vers l'extrémité amont du boîtier 100 après sa mise en oeuvre.

La composition pyrotechnique 440 est placée dans une chambre borgne 414 du piston 410. Cette chambre borgne 414 débouche sur l'extrémité aval du piston 410 en regard d'un initiateur 420, de préférence électrique, porté par la pièce 105 du boîtier constituant l'extrémité aval 114 de celui-ci.

Plus précisément la composition pyrotechnique 440 est placée en aval d'un bloc de terre 442 disposée dans le fond de la chambre borgne 414.

Le piston 410 est muni au voisinage de son extrémité aval d'une nervure annulaire 416.

La bague 460 et le bloc de métal à bas point de fusion 480 sont placés axialement en série entre cette nervure annulaire 416, en amont de celle-ci, et un décrochement annulaire 118 formé sur le boîtier 100 et dirigé vers l'extrémité aval 114 du boîtier 100.

Selon le mode de réalisation illustré sur la figure annexée, la bague 460 est placée en amont du bloc de métal 480.

La bague 460 est disposée autour du piston 410. Elle a la forme générale d'un diabolo. Ainsi la bague est composée d'un fût central 462 de faible épaisseur et de deux flasques 464 et 466 respectivement sur ses extrémités.

Le flasque amont 464 repose contre le décrochement 118. Le flasque aval 466 repose contre le bloc de métal 480 à bas point de fusion.

La bague 460 a un diamètre interne complémentaire du diamètre local du piston 410. De plus la bague 460 est brasée sur le piston 410 à l'aide d'un métal à bas point de fusion.

L'épaisseur usinée du fût central 462 est déterminée de telle sorte que après fusion de la brasure, suite à la mise en oeuvre de la composition exothermique 440, l'effort axial appliqué sur la tige 200 par l'environnement extérieur, lequel effort est répercuté sur la pince 300 et de la sur le piston 410, provoque l'effondrement du fût 462 et donc de la bague 460.

En d'autres termes, la bague 460 est conçue pour ne pas résister par elle même à la précontrainte appliquée par l'environnement extérieur. Cependant une fois brasée sur le piston 410, on évite l'effondrement de cette bague 460 sous l'effet de la précontrainte.

Le bloc de métal à bas point de fusion 480 est formé d'un anneau placé autour du piston 410 entre le flasque 466 de la bague 460 et la nervure 416 du piston 410.

On notera que la position axiale de la composition exothermique 440 dans la chambre 414 du piston 410 est déterminée de telle sorte que ladite composition exothermique 440 est placée en regard de la bague 460 et du bloc 480 de métal à bas point de fusion. Ainsi lors de sa mise en oeuvre, la composition exothermique 440 assure successivement la fusion de la brasure de la bague 460 et la fusion du bloc 480.

On notera par ailleurs que de préférence le dispositif comprend des moyens assurant l'étanchéité de la portion de la chambre 110 qui loge le moyen de verrouillage 400.

Pour cela de préférence il est prévu un joint annulaire dans une gorge 107 entre deux éléments 104 et 105 du boîtier 10, et deux joints annulaires sur les extrémités du piston 410, respectivement entre celui-ci et d'une part le décrochement 118, d'autre part un tronçon aval du boîtier. Selon la mise en oeuvre illustré sur la figure annexée, ces deux derniers joints annulaires sont placés respectivement dans une gorge 119 formée sur le tronçon du boîtier 100 délimitant le décrochement 118, et dans une gorge 418 formée sur la périphérie du piston 410.

De plus de préférence le piston 410 est muni sur sa périphérie externe, en aval de la pince 300, d'un décrochement tronconique 422 dirigé vers l'extrémité amont 112 du boîtier 100. En cas de nécessité, si l'effort exercé sur la pince 300 par la tige 200 n'est pas suffisant pour déplacer celle-ci, après mise en oeuvre de la composition exothermique 440, ce décrochement 422 peut solliciter les nervures 320 pour successivement provoquer le déplacement axial de la pince, puis l'ouverture de celle-ci.

Par ailleurs on observera sur le dessin annexé que le piston 410 possède à son extrémité amont un prolongement axial 430 qui repose contre l'extrémité aval de la tige 200, pour provoquer un déplacement forcé de cette tige 200 lors du déplacement du piston 410.

A titre d'exemple non limitatif le métal à bas point de fusion composant le bloc 480 et la brasure de la bague 460, peut être formé de :
- Bi50/Pb28/Sn22 (pour une température de fusion de l'ordre de 95-110°C) ou
- In (pour une température de fusion de l'ordre de 156°C) ou
- Sn ou Sn85/Zn15 (pour une température de fusion de l'ordre de 200-250°C) ou
- Pb82,5/Cd17,5 ou
- Pb96/Sb4 (pour une température de fusion de l'ordre de 250-300°C), tandis que la composition pyrotechnique 440 peut être formée de :

- Al + Fe₂O₃ ou
- Mg + Fe₂O₃ ou
- Al + CuO ou
- Mg + CuO.

Le fonctionnement du dispositif est pour l'essentiel le suivant.

En position de repos, le piston 410 est immobilisé à translation dans le boîtier 100, par la bague brasée 460 et le bloc de métal 480 à bas point de fusion, intercalés axialement en série entre le décrochement 118 et la nervure 416 du piston 410. Par conséquent le piston 410, par sa nervure 412, retient la pince 300 dans le fourreau 120. Et la pince 300 étant ainsi interdite d'expansion, elle retient à son tour la tige 200 par l'intermédiaire des nervures internes 212.

Lors de la mise en oeuvre de la composition exothermique 440 sous l'effet de l'initiateur 420, la bague 460 est tout d'abord débrasée, ce qui provoque son effondrement, par repli axial ou plissage du fût 460 sur lui même. Le piston 410 peut alors se déplacer axialement dans le boîtier 100, en rapprochement de l'extrémité amont 112. La pince 300 peut ainsi également se déplacer à translation sous l'effet de la traction exercée sur la tige 200. Lors de ce glissement de la pince 300, on obtient une libération des contraintes dans la chaine cinématique de sollicitation de la tige 200. Puis la pince 300 s'expanse dès que les nervures externes 312 échappent au fourreau 120. La tige 200 est alors libérée.

Par ailleurs le bloc de métal à bas point de fusion 480 est également fondu par la chaleur dégagée par la composition 440. De ce fait en cas de non fonctionnement de la bague 460, c'est à dire en cas de non effondrement de celle-ci, on obtient néanmoins le fonctionnement précité (déplacement du piston, puis de la pince).

Le bloc 480 a donc un effet redondant garantissant le fonctionnement attendu du dispositif.

On notera par ailleurs que en tant que de besoin, si l'effort exercé sur la tige 200 par l'environnement extérieur n'est pas suffisant pour assurer le déplacement du piston 410 et de la tige 200, l'expansion des gaz générés par la composition assure le déplacement du piston 410 et de là, d'une part le déplacement, puis l'expansion, de la pince 300 grâce au décrochement 422, et d'autre part le déplacement de la tige 200 grâce à l'extension 430.

L'homme de l'art comprendra que la structure ainsi proposée dans le cadre de la présente invention permet dans un premier temps de libérer en douceur les contraintes, avant de procéder à la libération définitive du système.

La structure proposée dans le cadre de la présente invention offre également l'avantage de permettre un contrôle de la vitesse de déplacement du piston 410 par laminage du métal de brasure à l'état fondu.

Bien entendu la présente invention n'est pas limitée au mode de réalisation particulier qui vient d'être décrit, mais s'étend à toutes variantes conformes aux revendications annexées.

En particulier dans le cadre de la présente invention :
- la composition pyrotechnique fortement exothermique 440 peut être remplacée par tout moyen de chauffage équivalent adapté, par exemple un moyen de chauffage électrique,
- le métal 460, 480 à bas point de fusion peut être remplacé par tout matériau approprié, par exemple parafine, alliages eutectiques, etc ...

## Revendications

1. Dispositif formant mécanisme, notamment pour application dans le domaine spatial, comprenant en combinaison :
- deux éléments de structure (100, 200) susceptibles de déplacement relatif le long d'un axe (O-O),
- un moyen de blocage (300) apte à interdire initialement le déplacement relatif entre les deux éléments de structure (100 , 200), et
- un moyen (400) de verrouillage contrôlé du moyen de blocage (300), apte à interdire initialement toute libération de celui-ci, **caractérisé par le fait que** le moyen (400) de verrouillage est adapté pour permettre sur commande, successivement, dans une première phase, un glissement dans le sens dudit axe (O-O) sur une amplitude contrôlée du moyen de blocage (300), propre à permettre une libération de contrainte entre les deux éléments de structure (100, 200), puis dans une seconde phase, une libération complète du moyen de blocage (300) et de là des éléments de structure (100, 200),
- le moyen de verrouillage (400) comprenant au moins un élément (460, 480) à base de matériau à bas point de fusion, et un moyen de chauffage (440) de puissance adaptée.

2. Dispositif selon la revendication 1, **caractérisé par le fait que** le moyen de verrouillage (400) comprend deux éléments redondants (460, 480).

3. Dispositif selon l'une des revendications 1 à 2, **caractérisé par le fait que** le moyen de verrouillage (400) comprend une bague (460) brasée sur l'un (200) des éléments de structure susceptibles de déplacement, à l'aide d'un matériau à bas point de fusion.

4. Dispositif selon la revendication 3, **caractérisé par le fait que** la bague (460) est formée d'une structure susceptible d'effondrement dès fusion du matériau de brasure.

5. Dispositif selon l'une des revendications 1 à 4, **caractérisé par le fait que** le moyen de verrouillage (400) comprend un bloc (480) de matériau à bas point de fusion formant butée de déplacement.

6. Dispositif selon l'une des revendications 1 à 5, **caractérisé par le fait que** le moyen de blocage (300) comprend une structure de pince en prise avec l'un des éléments de structure (200) susceptibles de déplacement.

7. Dispositif selon l'une des revendications 1 à 6, **caractérisé par le fait que** l'un des éléments de structure (100) est constitué d'un boîtier fixe, globalement annulaire autour d'un axe O-O, tandis que le second élément de structure (200) est formé d'une tige rectiligne rigide centrée sur l'axe O-O.

8. Dispositif selon l'une des revendications 1 à 7, **caractérisé par le fait que** les deux éléments de structure (100, 200) sont sollicités élastiquement en éloignement.

9. Dispositif selon la revendication 6, **caractérisé par le fait que** l'un des éléments de structure (200) est muni d'une excroissance annulaire (210) qui coopère avec la pince du moyen de blocage (300).

10. Dispositif selon la revendication 9, **caractérisé par le fait que** l'excroissance (210) est définie par une surface tronconique (212) qui tend à solliciter la pince (300) à l'ouverture.

11. Dispositif selon l'une des revendications 6, et 9 ou 10, **caractérisé par le fait que** la pince (300) est composée de plusieurs coquilles équiréparties autour de l'axe O-O du dispositif et confinées au repos par un boîtier (100).

12. Dispositif selon l'une des revendications 6, et 9 à 11, **caractérisé par le fait que** la pince (300) est susceptible de translation par rapport au boîtier du dispositif, lorsqu'elle est libérée par le moyen de verrouillage (400), pour échapper à des moyens de confinement formés par le boîtier (100).

13. Dispositif selon l'une des revendications 6, et 9 à 12, **caractérisé par le fait que** chaque coquille de la pince (300) comprend une cloison en forme de secteur de cylindre (302), munie respectivement à chacune de ses extrémités, d'une nervure interne (310, 320) et d'une nervure externe (312, 322).

14. Dispositif selon l'une des revendications 6, et 9 à 13, **caractérisé par le fait que** la pince (300) possède des nervures externes amont (312) placées dans un fourreau (120) complémentaire formé dans le boîtier (100).

15. Dispositif selon la revendication 14, **caractérisé par le fait que**, au repos, les nervures externes (312) affleurent l'extrémité amont du fourreau (120) et l'étendue axiale des nervures (312) est de préférence de l'ordre de 2 mm.

16. Dispositif selon l'une des revendications 6, et 9 à 15, **caractérisé par le fait que** la pince (300) coopère avec un piston (410) susceptible de translation selon l'axe O-O par rapport au boîtier (100) mais immobilisé initialement dans le boîtier 100 par des moyens à bas point de fusion.

17. Dispositif selon la revendication 16, **caractérisé par le fait que** le piston (410) possède un bourrelet (412) formant butée à des nervures (320) formées sur la pince (300).

18. Dispositif selon l'une des revendications 1 à 17, **caractérisé par le fait qu'**il comprend une composition (440) qui comprend un composé apte à générer des gaz propres à assurer un effet de propulsion d'un piston (410).

19. Dispositif selon l'une des revendications 1 à 18 prise en combinaison avec les revendications 3 et 5, **caractérisé par le fait que** la bague (460) et le bloc de matériau à bas point de fusion (480) sont placés axialement en série entre une nervure annulaire (416) d'un piston (410) et un décrochement annulaire (118) formé sur un boîtier (100).

20. Dispositif selon l'une des revendications 1 à 19 prise en combinaison avec la revendication 3, **caractérisé par le fait que** la bague (460) est composée d'un fût central (462) de faible épaisseur et de deux flasques (464, 466) respectivement sur ses extrémités.

21. Dispositif selon l'une des revendications 1 à 20 prise en combinaison avec la revendication 6, **caractérisé par le fait qu'**il comprend un piston (410) muni sur sa périphérie externe, en aval de la pince (300), d'un décrochement tronconique (422) apte à provoquer le déplacement axial de la pince, puis l'ouverture de celle-ci.

22. Dispositif selon l'une des revendications 1 à 21, **caractérisé par le fait qu'**il comprend un piston (410) possédant un prolongement axial (430) qui repose contre une extrémité de l'un des éléments de structure (200), pour provoquer un déplacement forcé de cet élément lors du déplacement du piston (410).

23. Dispositif selon l'une des revendications 1 à 22 prise en combinaison avec l'une des revendications 1, 3, 5 ou 19, **caractérisé par le fait que** le matériau à bas point de fusion est un métal.

24. Dispositif selon l'une des revendications 1 à 22, **caractérisé par le fait que** le matériau à bas point de fusion est choisi dans le groupe comprenant la parafine et des alliages eutectiques.

25. Dispositif selon l'une des revendications 1 à 24, **caractérisé par le fait que** le moyen de chauffage est une composition pyrotechnique fortement exothermique (440).

26. Dispositif selon l'une des revendications 1 à 24, **caractérisé par le fait que** le moyen de chauffage comprend un moyen de chauffage électrique.

27. Dispositif selon l'une des revendications 1 à 26 prise en combinaison avec la revendication 18, **caractérisé par le fait que** la composition qui génère les gaz est une composition pyrotechnique.

28. Dispositif selon l'une des revendications 1 à 27, **caractérisé par le fait qu'**il comprend au moins un élément (410) dont le déplacement est contrôlé par laminage d'un matériau (460, 480) à bas point de fusion.

## Patentansprüche

1. Vorrichtung, die einen Mechanismus bildet, insbesondere zur Anwendung im Bereich der Weltraumtechnik, die in Kombination folgendes umfaßt:
- zwei Bauelemente (100, 200), die zu einer relativen Verschiebung entlang einer Achse (O-O) fähig sind,
- ein Feststellmittel (300), das dazu geeignet ist, anfänglich die relative Verschiebung der beiden Bauelementen (100, 200) zu verhindern und
- ein Mittel (400) zur kontrollierten Verriegelung des Feststellmittels (300), das dazu fähig ist, anfänglich jedes Freigeben von diesem zu verhindern,
**dadurch gekennzeichnet, daß** das Mittel (400) zum Verriegeln dazu eingerichtet ist, gesteuert nacheinander folgendes zu gestatten: in einer ersten Phase ein Gleiten des Feststellmittels (300) in Richtung der Achse (O-O) mit einer kontrollierten Auslenkung, derart, daß eine Freigabe des Zwangs zwischen den beiden Bauelementen (100, 200) gestattet wird, und dann in einer zweiten Phase eine vollständige Freigabe des Feststellmittels (300) und damit der Bauelemente (100, 200),
wobei das Verriegelungsmittel (400) wenigstens ein Element (460, 480) auf der Basis eines Materials mit niedrigem Schmelzpunkt und ein Heizmittel (440) mit angepaßter Leistung umfaßt.

2. Vorrichtung nach Anspruch 1, **dadurch gekennzeichnet, daß** das Verriegelungsmittel (400) zwei redundante Elemente (460, 480) umfaßt.

3. Vorrichtung nach einem der Ansprüche 1 bis 2, **dadurch gekennzeichnet, daß** das Verriegelungsmittel (400) eine Büchse (460) umfaßt, die mittels eines Materials mit niedrigem Schmelzpunkt auf eines (200) der Konstruktionselemente, das zu Verschiebung fähig ist, gelötet ist.

4. Vorrichtung nach Anspruch 3, **dadurch gekennzeichnet, daß** die Büchse (460) so aufgebaut ist, daß sie beim Schmelzen des Lötmaterials zusammenbrechen kann.

5. Vorrichtung nach einem der Ansprüche 1 bis 4, **dadurch gekennzeichnet, daß** das Verriegelungsmittel (400) einen Block (480) aus einem Material mit niedrigem Schmelzpunkt umfaßt, der einen Verschiebungsanschlag bildet.

6. Vorrichtung nach einem der Ansprüche 1 bis 5, **dadurch gekennzeichnet, daß** das Feststellmittel (300) eine Zangenanordnung umfaßt, die mit einem der Bauelemente (200), das zu Verschiebungen fähig ist, im Eingriff ist.

7. Vorrichtung nach einem der Ansprüche 1 bis 6, **dadurch gekennzeichnet, daß** eines der Bauelemente (100) aus einem im wesentlichen um eine Achse O-O ringförmigen festen Gehäuse gebildet ist, während das zweite Bauelement (200) aus einer auf der Achse O-O zentrierten starren geraden Stange gebildet ist.

8. Vorrichtung nach einem der Ansprüche 1 bis 7, **dadurch gekennzeichnet, daß** auf die beiden Bauelemente (100, 200) elastisch eingewirkt wird, um diese voneinander zu entfernen.

9. Vorrichtung nach Anspruch 6, **dadurch gekennzeichnet, daß** eines der Bauelemente (200) mit einem ringförmigen Vorsprung (210) ausgestattet ist, der mit der Zange des Feststellmittels (300) zusammenarbeitet.

10. Vorrichtung nach Anspruch 9, **dadurch gekennzeichnet, daß** der Vorsprung (210) durch eine kegelstumpfförmige Fläche (212) definiert ist, die darauf abzielt die Zange (300) zu öffnen.

11. Vorrichtung nach einem der Ansprüche 6, und 9 oder 10, **dadurch gekennzeichnet, daß** die Zange (300) aus mehreren Klauen zusammengesetzt ist, die gleichmäßig um die Achse O-O der Vorrichtung verteilt und in der Ruheposition durch ein Gehäuse (100) eingeschlossen sind.

12. Vorrichtung nach einem der Ansprüche 6, und 9 bis 11, **dadurch gekennzeichnet, daß** die Zange (300) gegenüber dem Gehäuse der Vorrichtung verschiebbar ist, wenn sie vom Verriegelungsmittel (400) freigegeben wurde, um Einschlußmitteln zu entkommen, die durch das Gehäuse (100) gebildet sind.

13. Vorrichtung nach einem der Ansprüche 6, und 9 bis 12, **dadurch gekennzeichnet, daß** jede Klaue der Zange (300) ein Wandteil in der Form eines Zylindersektors (302) umfaßt, das an jedem seiner beiden Enden mit einer inneren Rippe (310, 320) bzw. einer äußeren Rippe (312, 322) ausgestattet ist.

14. Vorrichtung nach einem der Ansprüche 6, und 9 bis 13, **dadurch gekennzeichnet, daß** die Zange (300) obere äußere Rippen (312) aufweist, die in einer komplementären Hülse (120) angeordnet sind, die im Gehäuse (100) ausgebildet ist.

15. Vorrichtung nach Anspruch 14, **dadurch gekennzeichnet, daß** die äußeren Rippen (312) in der Ruheposition bündig mit dem oberen Ende der Hülse (120) sind und die axiale Ausdehnung der Rippen (312) vorzugsweise in der Größenordnung von 2 mm ist.

16. Vorrichtung nach einem der Ansprüche 6, und 9 bis 15, **dadurch gekennzeichnet, daß** die Zange (300) mit einem Kolben (410) zusammenarbeitet, der gegenüber dem Gehäuse (100) entlang der Achse O-O verschiebbar, jedoch anfänglich durch Mittel mit niedrigem Schmelzpunkt im Gehäuse (100) festgestellt ist.

17. Vorrichtung nach Anspruch 16, **dadurch gekennzeichnet, daß** der Kolben (410) eine Verdickung (412) aufweist, die einen Anschlag für auf der Zange (300) ausgebildete Rippen (320) bildet.

18. Vorrichtung nach einem der Ansprüche 1 bis 17, **dadurch gekennzeichnet, daß** sie eine Mischung (440) umfaßt, die eine Zusammensetzung umfaßt, die dazu geeignet ist Gase zu erzeugen, die dazu fähig sind für einen Kolben (410) eine Vortriebswirkung zu erzeugen.

19. Vorrichtung nach einem der Ansprüche 1 bis 18 in Verbindung mit den Ansprüchen 3 und 5, **dadurch gekennzeichnet, daß** die Büchse (460) und der Materialblock mit niedrigem Schmelzpunkt (480) axial in einer Reihe liegend zwischen einer ringförmigen Rippe (416) eines Kolbens (410) und einem an einem Gehäuse (100) ausgebildeten ringförmigen Rücksprung (118) angeordnet sind.

20. Vorrichtung nach einem der Ansprüche 1 bis 19 in Verbindung mit Anspruch 3, **dadurch gekennzeichnet, daß** die Büchse (460) aus einem zentralen Schaft (462) mit geringer Dicke und zwei an seinen Enden liegenden respektiven Flanschen (464, 466) zusammengesetzt ist.

21. Vorrichtung nach einem der Ansprüche 1 bis 20 in Verbindung mit Anspruch 6, **dadurch gekennzeichnet, daß** sie einen Kolben (410) umfaßt, der auf seinem äußeren Umfang unterhalb der Zange (300) mit einem kegelstumpfförmigen Rücksprung (422) ausgestattet ist, der dazu geeignet ist, die axiale Verschiebung der Zange und dann deren Öffnung zu bewirken.

22. Vorrichtung nach einem der Ansprüche 1 bis 21, **dadurch gekennzeichnet, daß** sie einen Kolben (410) umfaßt, der eine axiale Verlängerung (430) aufweist, die gegen ein Ende eines der Bauelemente (200) drückt, um beim Verschieben des Kolbens (410) eine erzwungene Verschiebung dieses Elements zu bewirken.

23. Vorrichtung nach einem der Ansprüche 1 bis 22 in Verbindung mit einem der Ansprüche 1, 3, 5 oder 19, **dadurch gekennzeichnet, daß** das Material mit niedrigem Schmelzpunkt ein Metall ist.

24. Vorrichtung nach einem der Ansprüche 1 bis 22, **dadurch gekennzeichnet, daß** das Material mit niedrigem Schmelzpunkt aus der Gruppe gewählt ist, die das Paraffin und eutektische Legierungen umfaßt.

25. Vorrichtung nach einem der Ansprüche 1 bis 24, **dadurch gekennzeichnet, daß** das Heizmittel eine stark exotherme pyrotechnische Mischung (440) ist.

26. Vorrichtung nach einem der Ansprüche 1 bis 24, **dadurch gekennzeichnet, daß** das Heizmittel ein elektrisches Heizmittel umfaßt.

27. Vorrichtung nach einem der Ansprüche 1 bis 26 in Verbindung mit Anspruch 18, **dadurch gekennzeichnet, daß** die Mischung, die die Gase erzeugt, eine pyrotechnische Mischung ist.

28. Vorrichtung nach einem der Ansprüche 1 bis 27, **dadurch gekennzeichnet, daß** sie wenigstens ein Element (410) umfaßt, dessen Verschiebung durch das Verformen eines Materials (460, 480) mit niedrigem Schmelzpunkt kontrolliert wird.

## Claims

1. A mechanism-forming device, in particular for use in space, the device being comprising in combination:
· two structural elements (100, 200) suitable for relative displacement along an axis (0-0);
. blocking means (300) suitable initially for preventing relative displacement between the two structural elements (100, 200); and
· locking means (400) for controlled locking of the blocking means (300), suitable initially for preventing any release thereof, **characterized by** the fact that the locking means (400) are adapted in such a way as to permit, on command, and successively, the blocking means (300) to slide along the length of said axis (0-0) through a controlled amplitude suitable for releasing stress between the two structural elements (100, 200), and then in a second stage causing complete release of the blocking means (300) and thus of the structural elements (100, 200), the locking means (400) comprising at least one element (460, 480) made of low-melting point material, and heater means (440) of suitable power.

2. A device according to claim 1, **characterized by** the fact that the locking means (400) comprise two redundant elements (460, 480).

3. A device according to claims 1 and 2, **characterized by** the fact that the locking means (400) comprise a ring (460) soldered by means of a low-melting point material to one of the structural elements (200) capable of relative displacement.

4. A device according to claim 3, **characterized by** the fact that the ring (460) is formed by a structure suitable for collapsing on melting of the solder material.

5. A device according to any one of claims 1 to 4, **characterized by** the fact that the locking means (400) comprise a block (480) of low-melting point material forming an abutment against displacement.

6. A device according to any one of claims 1 to 5, **characterized by** the fact that the blocking means (300) comprise a clamp structure engaged with one of the structural elements (200) capable of relative displacement.

7. A device according to any one of claims 1 to 6, **characterized by** the fact that one of the structural elements (100) is constituted by a stationary housing that is generally annular about an axis O-O, while the second structural element (200) is formed by a rigid rectilinear rod centered on the axis O-O.

8. A device according to any one of claims 1 to 7, **characterized by** the fact that the two structural elements (100, 200) are urged resiliently apart.

9. A device according to claim 6, **characterized by** the fact that one of the structural elements (200) is provided with an annular projection (210) which co-operates with the clamp of the blocking means (300).

10. A device according to claim 9, **characterized by** the fact that the projection (210) is defined by a frustoconical surface (212) which tends to urge the clamp (300) into an open position.

11. A device according to any one of claims 6, and 9 or 10, **characterized by** the fact that the clamp (300) is made up of a plurality of shells uniformly distributed around the axis O-O of the device and confined at rest by a housing (100).

12. A device according to any one of claims 6, and 9 to 11, **characterized by** the fact that the clamp (100) is capable of moving in translation relative to the housing of the device once released by the locking means (400) so as to escape from the confinement means formed by the housing (100).

13. A device according to any one of claims 6, and 9 to 12, **characterized by** the fact that each shell of the clamp (300) comprises a partition in the form of a cylindrical sector (302), provided at each of its ends both with an inner rib (310, 320) and with an outer rib (312, 322).

14. A device according to any one of claims 6, and 9 to 13, **characterized by** the fact that the clamp (300) possesses upstream outer ribs (312) placed in a complementary sheath (120) formed in the housing (100).

15. A device according to claim 14, **characterized by** the fact that, at rest, the outer ribs (312) are flush with the upstream end of the sheath (120) and the axial extent of the ribs (312) is preferably about 2 mm.

16. A device according to any one of claims 6, and 9 to 15, **characterized by** the fact that the clamp (300) co-operates with a piston (410) capable of moving in translation along the axis O-O relative to the housing (100) but prevented initially from moving inside the housing (100) by low-melting point means.

17. A device according to claim 16, **characterized by** the fact that the piston (410) possesses a bead (412) forming an abutment for ribs (320) formed on the clamp (300).

18. A device according to any one of claims 1 to 17, **characterized by** the fact that it includes a composition (440) containing a compound suitable for generating gases suitable for applying a propulsion effect on a piston (410).

19. A device according to any one of claims 1 to 18 taken in combination with claims 3 and 5, **characterized by** the fact that the ring (460) and the block of low-melting point material (480) are placed axially in series between an annular rib (416) of a piston (410) and an annular step (118) formed in a housing (100).

20. A device according to any one of claims 1 to 19 taken in combination with claim 3, **characterized by** the fact that the ring (460) comprises a thin walled central cylinder (462) and respective flanges (464, 466) at its two ends.

21. A device according to any one of claims 1 to 20 taken in combination with claim 6, **characterized by** the fact that it includes a piston (410) provided on its outer periphery, downstream from the clamp (300) with a frustoconical step (422) suitable for causing the clamp to move axially and then to open.

22. A device according to any one of claims 1 to 21, **characterized by** the fact that it includes a piston (410) possessing an axial extension (430) resting against one end of one of the structural elements (200) to force displacement of said element during displacement of the piston (410).

23. A device according to any one of claims 1 to 22 taken in combination with one of claims 1, 3, 5 or 19, **characterized by** the fact that the low-melting point material is a metal.

24. A device according to any one of claims 1 to 22, **characterized by** the fact that the low-melting point material is selected from the group comprising paraffin and eutectic alloys.

25. A device according to any one of claims 1 to 24, **characterized by** the fact that the heater means is a highly exothermal pyrotechnic composition (440).

26. A device according to any one of claims 1 to 24, **characterized by** the fact that the heater means comprise electrical heater means.

27. A device according to any one of claims 1 to 26 taken in combination with claim 18, **characterized by** the fact that the composition which generates the gas is a pyrotechnic composition.

28. A device according to any one of claims 1 to 27, **characterized by** the fact that it includes at least one element (410) whose displacement is controlled by throttling a low-melting point material (460, 480).
